# EUROPEAN PATENT SPECIFICATION

(11) **EP 3 914 849 B1**
(45) Date of publication and mention of the grant of the patent: **29.05.2024**
(21) Application number: 20700924.2
(22) Date of filing: 22.01.2020
(51) Int. Cl.: F17C 5/06, F17C 7/00

(54) **GAS DISTRIBUTION SYSTEM FOR FEEDING GAS CONTAINED IN DIFFERENT TANKS TO AN ENGINE OF VEHICLE POWERED BY ALTERNATIVE GAS FUEL**
GASVERTEILUNGSSYSTEM ZUM ZUFÜHREN VON IN VERSCHIEDENEN TANKS ENTHALTENEM GAS ZU EINEM DURCH ALTERNATIVEN GASBRENNSTOFF BETRIEBENEN MOTOR EINES FAHRZEUGS
SYSTÈME DE DISTRIBUTION DE GAZ POUR L'ALIMENTATION EN GAZ PRÉSENT DANS DIFFÉRENTS RÉSERVOIRS D'UN MOTEUR DE VÉHICULE ALIMENTÉ PAR UN CARBURANT GAZEUX ALTERNATIF

(30) Priority: 22.01.2019 IT 201900000939
(43) Date of publication of application: 01.12.2021
(73) Proprietor: CNH Industrial Italia S.p.A., 10156 Torino (IT)
(72) Inventor: TENNERIELLO, Luigi, 41030 Bomporto (IT)
(74) Representative: CNH Industrial IP Department
(86) International application number: PCT/EP2020/051459
(87) International publication number: WO 2020/152195

(56) References cited:
- WO-A1-2009/006852
- DE-A1-102009 049 687
- DE-A1-102015 016 319
- US-A1- 2006 246 177
- US-A1- 2016 116 450
- US-A1- 2018 138 528

## Description

### TECHNICAL FIELD

The present invention relates to a gas distribution system for feeding gas contained in different tanks to an engine of a vehicle powered by alternative gas fuel.

### BACKGROUND OF THE INVENTION

Vehicles, tractors for instance, may be powered by using alternative gas fuel in order to reduce the emissions with respect to other typology of fossil fuels. An example is shown in patent application WO2009006852.

One example of alternative gas fuel is Compressed Natural Gas (CNG) (methane stored at high pressure) that is a fuel which can be used in place of gasoline, diesel fuel and propane/LPG.

Another example of alternative gas fuel is Liquefied Natural Gas (LNG) that is a natural gas (predominantly methane, CH₄, with some mixture of ethane C₂H₆) that has been cooled down to liquid form for ease and safety of non-pressurized storage or transport.

Alternative gas fuel are contained in a number of **gas tanks** (two or more) that are carried by the vehicle or by a towed implement and are connected with the engine through a **gas distribution system**.

In some conditions, gas contained in different tanks may have different pressures; under the above conditions gas may flow from one tank (i.e. the tank having the highest pressure) to the other(s) tank(s) (i.e. the tank(s) having lower pressure).

This unwanted mixing of gas between tanks may produce a number of drawbacks including:
gas lamination with associated temperature reduction and potential damage of part of the gas distribution system;
unwanted noise in the gas distribution system;
potential intervention of the flow excess protection devices if installed in the gas distribution system; and
if different tanks contain different gases, unwanted mixing of gases resulting a non optimal mixing gas mixture supplied to the engine.

In view of the above, the need is felt to foresee an optimized gas distribution system avoiding the mixture of gas contained in different tanks when gas contained in the tanks have different pressures.

### SUMMARY OF THE INVENTION

The above technical problem is solved by the present invention that relates to a gas distribution system for feeding gas contained in different tanks to an engine of vehicle powered by alternative gas fuel as defined in attached claim 1.

### BRIEF DESCRIPTION OF THE DRAWINGS

The invention shall be described in the accompanied drawings that represent a non-limiting example of the invention wherein:
Figure 1 represents schematically a gas distribution system for feeding gas contained in different tanks to an engine of vehicle, a tractor for instance, powered by alternative gas fuel;
Figure 2 represents schematically the gas distribution system in a first working phase (gas recharge phase); and
Figure 3 represents the gas distribution system in a second working phase (gas supply phase).

### DETAILED DESCRIPTION OF THE INVENTION

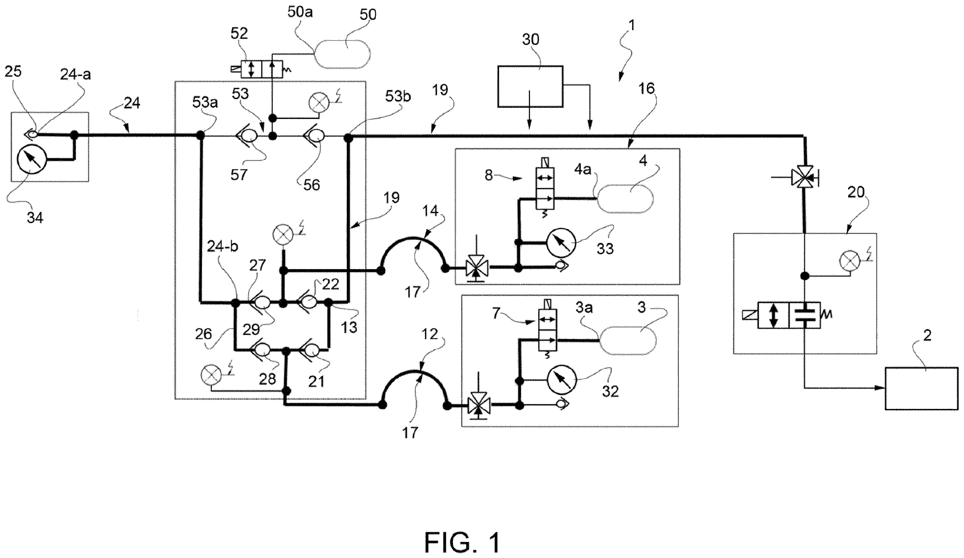

**In** **figure 1** numeral 1 indicates, as a whole, a gas distribution system for feeding gas to an engine 2 (of known kind represented schematically) of a vehicle (a tractor for instance) powered by alternative gas fuel gas contained in a first gas tank 3 and in at least a second gas tank 4. Alternative gas fuel may be Compressed Natural Gas (CNG) (methane stored at high pressure) that is a fuel which can be used in place of gasoline, diesel fuel and propane/LPG. Another example of alternative gas fuel is Liquefied Natural Gas (LNG) that is a natural gas (predominantly methane, CH₄, with some mixture of ethane C₂H₆) that has been cooled down to liquid form for ease and safety of non-pressurized storage or transport.

The first gas tank 3 has a gas outlet 3a that communicates with a first valve 7 movable between a first rest position wherein gas may flow only along one direction to be supplied to the gas tank 3 and a second position wherein gas may flow in different directions through the first valve 7.

The second gas tank 4 has a gas outlet 4a that communicates with a second valve 8 movable between a first rest position wherein gas may flow only along one direction to be supplied to the gas tank 4 and a second position wherein gas may flow in different directions through the second valve 8.

A first gas conduit 12 extends between the first valve 7 and a merge point 13 and a second gas conduit 14 extends between the second valve 8 and the merge point 13; accordingly the first gas conduit 12 connects the gas outlet 3a of the first gas tank 3 and the merge point 13 and the second gas conduit 14 connects the gas outlet 4a of the second gas tank 4 and the merge point 13.

Each gas conduit 12/14 may comprise a number of pipes connected together comprising rigid pipes and flexible pipes. If the gas tanks 3,4 are carried by a tender 16 (represented schematically) towed by a vehicle (not shown) flexible pipes 17 may be placed between the vehicle and the tender 16.

A supply gas conduit 19 connects the merge point 13 and a pressure regulator 20 (of known kind) supplying the gas to the engine 2. A first check valve 21 is interposed in the first gas conduit 12 and a second check valve 22 is interposed in the second gas conduit 14 so that the first and the second valves 21, 22 are placed on opposite sides of the merge point 13 and may be opened by the difference of pressure of the gas in the first/the second gas conduit 12 e 13 and the merge point 13.

The first check 21 valve is normally closed and allows the flow of gas only in one direction, i.e. toward merge point 13. The second check valve 22 is normally closed and allows the flow of gas only in one direction, i.e. toward merge point 13.

**According to the present invention the** first check valve 21 is interposed in the first gas conduit 12 and the second check valve 22 is interposed in the second gas conduit 14 so that the first and the second valves 21, 22 realize valve means to select the gas tank 3,4 having the highest gas pressure and suppling to the engine 2 the gas provided by the selected tank 3 o 4.

The supply gas conduit 19 contains the gas originated by the gas tank 3, 4 having the highest pressure as the valve wherein the pressure difference between both ends of the valve opens.

A gas recharge conduit 24 has one end 24-a provided with a check-valve 25 and another end 24-b that bifurcates in a first branch 26 that is connected with the first gas conduit 12 in a position between the first check valve 21 and the first gas tank 3 and a second branch 27 that is connected with the second gas conduit 14 in a position between the second check valve 22 and the second gas tank 4.

The check valve 25 is normally closed and allows the flow of gas only in one direction, i.e. toward end 24-b.

The first branch 26 is provided with a third check valve 28 that is opened when pressurized gas is supplied to the gas recharge conduit 24 and is kept in the closing position by the gas present in the first gas conduit 12.

The second branch 27 is provided with a fourth check valve 29 that is opened when pressurized gas is supplied to the gas recharge conduit 24 and is kept in the closing position by the gas present in the second gas conduit 14.

More specifically, the third check valve 28 is normally closed and allows the flow of gas only in one direction, i.e. toward the first conduit 12. The fourth check valve 29 is normally closed and allows the flow of gas only in one direction, i.e. toward the second conduit 14.

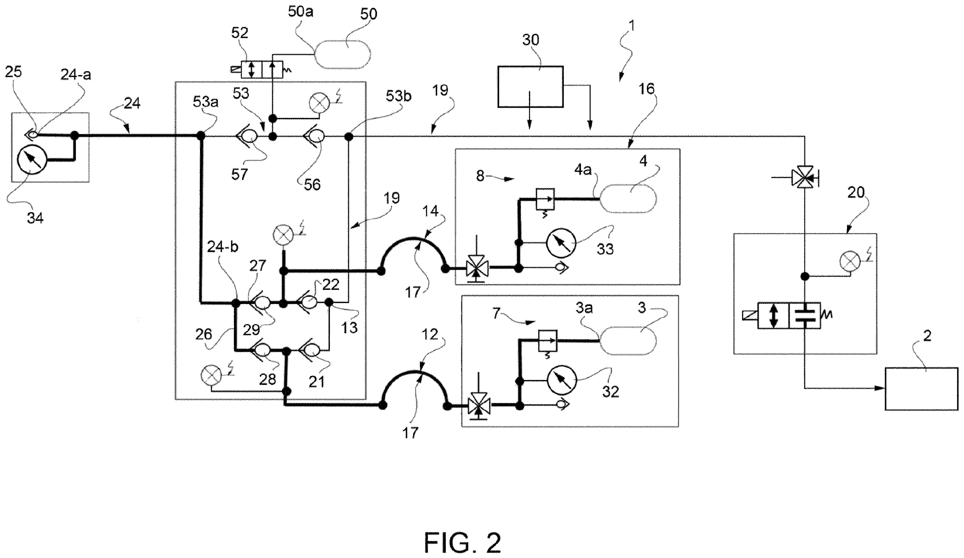

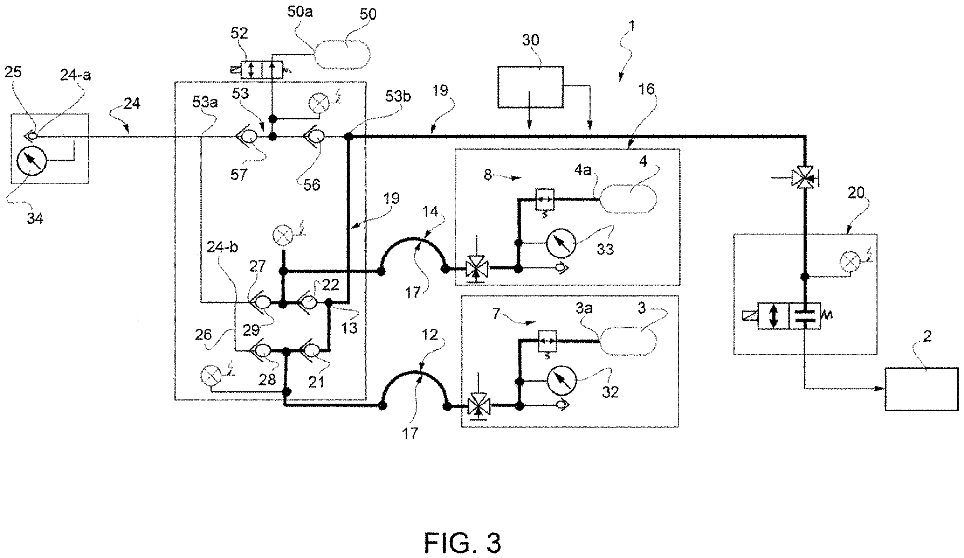

An electronic control unit 30 controls the first and the second valve 7, 8 to realize:
**A gas charging phase** (figure 2) : in the gas charging phase valves 7 and 8 are placed in the first position. The end 24-a is connected with a source of pressurized gas (not shown) ; the force generated by pressurized gas produces the opening of check valve 25 and the gas is fed through the gas recharge conduit 24 to the third and fourth check vale 27, 26 that also open (see figure 2). The gas is then provided to the first gas conduit 12 and to the second gas conduit 14 so that it reaches the tanks 3 and 4 (that are recharged) passing through open valves 7 and 8. During this phase the gas may also flow towards the pressure regulator 20 through gas conduit 19. This does not constitute a problem as during tanks refilling the engine 2 cannot operate.
**a gas delivery phase (****figure 3****):** in the gas charging delivering valves 7 and 8 are placed in the second position and the gas contained in the tanks 3, 4 is fed to the first conduit 12 / and the second conduit 14 so that the third and fourth valves 28 and 29 remain closed and the first or the second check valve 21,22 associated to the tank having highest pressure is opened (in the example of figure 3, valve 21) due to the difference of pressure.

Pressure gauges 32, 33 and 34 are placed on first gas conduit 12, second gas conduit 14 and gas recharge conduit 24.

Additionally a third tank 50 may be used, the third gas tank having a gas outlet 50a that communicates with a third valve 51 movable between a first rest position wherein gas may flow only along one direction to be supplied to the gas tank 50 in the gas charging phase and a second position wherein gas may flow in different directions through the third valve 52 in the gas delivery phase.

Valve 52 communicates form one side with the third gas tank 50 and on the other side with a by-pass conduit 53 having one end 53a communicating with the gas recharge conduit 24 and another end 53b communicating with the supply gas conduit 19. End 53b also communicates with the merge point 13. A sixth check valve 56 is placed along by pass conduit 53 and interposed between the output of the third valve 52 and end 53b and a seventh check valve 57 is placed along by pass conduit 53 and interposed between the output of the third valve 52 and end 53a.

According to this embodiment the first check valve 21, the second check valve 22, the sixth check valve 56 have all one side communicating with respective tanks 3, 4 and 50 and the other side communicating with the supply gas conduit 19 so that the first, the second and the sixth valves 21, 22, 56 realize the valve means to select the gas tank 3,4,50 having the highest gas pressure and suppling to the engine 2 the gas provided by the selected tank 3, 4 or 50.

Check valve 57 has the same function of check valves 28 and 29 and is opened during the gas charging phase.

## Claims

1. Gas distribution system for feeding to an engine powered by alternative gas fuel, gas contained in a first gas tank (3) and at least in a second gas tank (4), said system having a first gas conduit (12) connecting an output (3a) of the first gas tank (3)and a second gas conduit (14) connecting an output (4a) of the second gas tank (4), **wherein** valve means (7,8) are provided on the conduits (12,14) to select the gas tank (3,4) having the highest gas pressure and suppling to the engine (2) the gas provided by the selected tank;
said valve means further comprise at least first check valve (21) that is interposed in the first gas conduit (12) and a second check valve (22) that is interposed in the second gas conduit (14) so that the first and the second valves (21, 22) are placed on opposite sides of a merge point (13) where the first conduit (12) and the second conduit (14) meet and may be opened by the difference of pressure of the gas in the first/the second gas conduit (12 e 14) and the merge point (13) ;
a supply gas conduit (19) connects the merge point (13) and a pressure regulator (20) supplying the gas to the engine (2); the supply gas conduit (19) contains the gas originated by the gas tank (3, 4) having the highest pressure;
the gas distribution system is **characterized in** further comprising a gas recharge conduit (24) that has one free end (24-a) provided with a check-valve (25) and another end (24-b) that bifurcates in a first branch (26) that is connected with the first gas conduit (12) in a position between the first check valve (21) and the first gas tank (3) and a second branch (27) that is connected with the second gas conduit (14) in a position between the second check valve (22) and the second gas tank (4); the first branch (26) is provided with a third check valve (28) that is opened when pressurized gas is supplied to the gas recharge conduit (24); the second branch (27) is provided with a fourth check valve (29) that is opened when pressurized gas is supplied to the gas recharge conduit (24) .

2. Gas distribution system as claimed in claim 1, wherein a first gas tank (3) has a gas outlet (3a) that communicates with a first valve (7) movable between a first rest position wherein gas may flow only along one direction to be supplied to the gas tank (3) and a second position wherein gas may flow in different directions through the first valve (7); the second gas tank (4) has a gas outlet (4a) that communicates with a second valve (8) movable between a first rest position wherein gas may flow only along one direction to be supplied to the gas tank (4) and a second position wherein gas may flow in different directions through the second valve (8);
an electronic control unit (30) controls the first and the second valve (7, 8) to realize:
a gas charging phase wherein first and second valves (7,8) are placed in the first position so that when said free end portion (24-a) is connected with a source of pressurized gas, the gas is fed to the third and fourth check valve (28, 29) that open allowing the gas to flow in the first/second gas conduit (12,14) to reach respective first and second tanks (3,4) passing through open valves (7,8);
a gas delivery phase wherein first and second valves (7,8) are placed in the second position and the gas contained in the tanks (3, 4) is fed to the first conduit (12) and to the second conduit (14) so that the third and fourth valves (28, 29) remain closed and the first or the second check valve (21,22) associated to the tank having highest pressure is opened.

## Patentansprüche

1. Gasverteilungssystem zum Versorgen eines Motors, der durch alternativen Gaskraftstoff angetrieben wird, wobei das Gas in einem ersten Gasbehälter (3) und mindestens in einem zweiten Gasbehälter (4) enthalten ist,
wobei das System eine erste Gasleitung (12), die einen Auslass (3a) des ersten Gasbehälters (3) verbindet, und eine zweite Gasleitung (14) umfasst, die einen Auslass (4a) des zweiten Gasbehälters (4) verbindet,
wobei Ventileinrichtungen (7, 8) an den Leitungen (12, 14) vorgesehen sind, um den Gasbehälter (3, 4) auszuwählen, der den höchsten Gasdruck aufweist und dem Motor (2) das Gas zuzuführen, das von dem ausgewählten Behälter bereitgestellt wird;
wobei die Ventileinrichtungen des Weiteren mindestens ein erstes Rückschlagventil (21), das in der ersten Gasleitung (12) angeordnet ist, und ein zweites Rückschlagventil (22) umfassen, das in der zweiten Gasleitung (14) angeordnet ist, sodass das erste und das zweite Ventil (21, 22) auf gegenüberliegenden Seiten eines Zusammenführungspunktes (13) angeordnet sind, an dem sich die erste Leitung (12) und die zweite Leitung (14) treffen, und durch den Druckunterschied des Gases in der ersten/zweiten Gasleitung (12 und 14) und dem Zusammenführungspunkt (13) geöffnet werden können;
wobei eine Versorgungsgasleitung (19) den Zusammenführungspunkt (13) und einen Druckregler (20) verbindet, der das Gas dem Motor (2) zuführt;
wobei die Versorgungsgasleitung (19) das Gas enthält, das aus dem Gasbehälter (3, 4) stammt, der den höchsten Druck aufweist;
wobei das Gasverteilungssystem **dadurch gekennzeichnet ist, dass** es des Weiteren eine Gasnachfüllleitung (24) umfasst, die ein freies Ende (24-a), das mit einem Rückschlagventil (25) versehen ist, und ein anderes Ende (24-b) umfasst, das sich in einen ersten Zweig (26), der mit der ersten Gasleitung (12) in einer Position zwischen dem ersten Rückschlagventil (21) und dem ersten Gasbehälter (3) verbunden ist, und einen zweiten Zweig (27) aufteilt, der mit der zweiten Gasleitung (14) in einer Position zwischen dem zweiten Rückschlagventil (22) und dem zweiten Gasbehälter (4) verbunden ist;
wobei der erste Zweig (26) mit einem dritten Rückschlagventil (28) versehen ist, das geöffnet wird, wenn der Gasnachfüllleitung (24) mit Druck beaufschlagtes Gas zugeführt wird;
wobei der zweite Zweig (27) mit einem vierten Rückschlagventil (29) versehen ist, das geöffnet wird, wenn der Gasnachfüllleitung (24) mit Druck beaufschlagtes Gas zugeführt wird.

2. Gasverteilungssystem nach Anspruch 1, wobei ein erster Gasbehälter (3) einen Gasauslass (3a) umfasst, der mit einem ersten Ventil (7) in Verbindung steht, das zwischen einer ersten Ruheposition, in der Gas nur in eine Richtung strömen kann, um dem Gasbehälter (3) zugeführt zu werden, und einer zweiten Position bewegbar ist, in der Gas in unterschiedliche Richtungen durch das erste Ventil (7) strömen kann;
wobei der zweite Gasbehälter (4) einen Gasauslass (4a) umfasst, der mit einem zweiten Ventil (8) in Verbindung steht, das zwischen einer ersten Ruheposition, in der Gas nur in eine Richtung strömen kann, um dem Gasbehälter (4) zugeführt zu werden, und einer zweiten Position bewegbar ist, in der Gas in unterschiedliche Richtungen durch das zweite Ventil (8) strömen kann;
wobei eine elektronische Steuereinrichtung (30) das erste und zweite Ventil (7, 8) steuert, um Folgendes zu realisieren:
eine Gasnachfüllphase, wobei das erste und zweite Ventil (7, 8) in der ersten Position angeordnet sind, sodass, wenn der freie Endabschnitt (24-a) mit einer Quelle von mit Druck beaufschlagten Gas verbunden ist, das Gas dem dritten und vierten Rückschlagventil (28, 29) zugeführt wird, die sich öffnen, um zu ermöglichen, dass das Gas in die erste/zweite Gasleitung (12, 14) strömen kann, um über geöffnete Ventile (7, 8) den entsprechend ersten und zweiten Behälter (3, 4) zu erreichen;
eine Gaszuführphase, wobei das erste und zweite Ventil (7, 8) in der zweiten Position angeordnet sind, und das Gas, das in den Behältern (3, 4) enthalten ist, der ersten Leitung (12) und der zweiten Leitung (14) zugeführt wird, sodass das dritte und vierte Ventil (28, 29) geschlossen bleiben und das erste oder zweite Rückschlagventil (21, 22) geöffnet wird, das mit dem Behälter verknüpft ist, der den höchsten Druck aufweist.

## Revendications

1. Système de distribution de gaz pour alimenter un moteur alimenté par un carburant alternatif, du gaz contenu dans un premier réservoir de gaz (3) et au moins dans un second réservoir de gaz (4), ledit système ayant un premier conduit de gaz (12) reliant une sortie (3a) du premier réservoir de gaz (3) et un second conduit de gaz (14) reliant une sortie (4a) du second réservoir de gaz (4), dans lequel des moyens de vanne (7, 8) sont prévus sur les conduits (12, 14) pour sélectionner le réservoir de gaz (3, 4) ayant la pression de gaz la plus élevée et fournir au moteur (2) le gaz fourni par le réservoir sélectionné ;
lesdits moyens de vanne comprennent en outre au moins un premier clapet anti-retour (21) interposé dans le premier conduit de gaz (12) et un deuxième clapet anti-retour (22) interposé dans le second conduit de gaz (14) de sorte que le premier et le deuxième clapet (21, 22) sont placés sur les côtés opposés d'un point de jonction (13) où le premier conduit (12) et le second conduit (14) se rencontrent et peuvent être ouverts par la différence de pression du gaz dans le premier/le second conduit de gaz (12, 14) et le point de jonction (13) ;
un conduit de gaz d'alimentation (19) relie le point de jonction (13) et un régulateur de pression (20) fournissant le gaz au moteur (2) ; le conduit de gaz d'alimentation (19) contient le gaz provenant du réservoir de gaz (3, 4) ayant la pression la plus élevée ;
le système de distribution de gaz est **caractérisé en ce qu'**il comprend en outre un conduit de recharge de gaz (24) qui a une extrémité libre (24-a) pourvue d'un clapet anti-retour (25) et une autre extrémité (24-b) qui se divise en une première branche (26) qui est reliée au premier conduit de gaz (12) dans une position située entre le premier clapet anti-retour (21) et le premier réservoir de gaz (3) et une seconde branche (27) qui est reliée au deuxième conduit de gaz (14) dans une position située entre le deuxième clapet anti-retour (22) et le second réservoir de gaz (4) ; la première branche (26) est pourvue d'un troisième clapet anti-retour (28) qui s'ouvre lorsque du gaz sous pression est fourni au conduit de recharge de gaz (24) ; la seconde branche (27) est pourvue d'un quatrième clapet anti-retour (29) qui s'ouvre lorsque du gaz sous pression est fourni au conduit de recharge de gaz (24).

2. Système de distribution de gaz dans lequel un premier réservoir de gaz (3) possède, selon la revendication 1, une sortie de gaz (3a) qui communique avec une première vanne (7) mobile entre une première position de repos dans laquelle le gaz ne peut s'écouler que dans une seule direction pour être fourni au réservoir de gaz (3) et une seconde position dans laquelle le gaz peut s'écouler dans différentes directions à travers la première vanne (7) ; le second réservoir de gaz (4) a une sortie de gaz (4a) qui communique avec une deuxième vanne (8) mobile entre une première position de repos dans laquelle le gaz ne peut s'écouler que dans une seule direction pour être fourni au réservoir de gaz (4) et une seconde position dans laquelle le gaz peut s'écouler dans différentes directions à travers la deuxième vanne (8) ;
une unité de commande électronique (30) commande la première et la deuxième vanne (7, 8) afin d'effectuer :
une phase de chargement de gaz dans laquelle les première et deuxième vannes (7, 8) sont placées dans la première position de sorte que lorsque ladite partie d'extrémité libre (24-a) est connectée à une source de gaz sous pression, le gaz est acheminé vers les troisième et quatrième clapets anti-retour (28, 29) qui s'ouvrent pour permettre au gaz de circuler dans le premier/second conduit de gaz (12, 14) pour atteindre les premier et second réservoirs respectifs (3, 4) en passant par les vannes ouvertes (7, 8) ;
une phase de distribution de gaz dans laquelle les première et deuxième vannes (7, 8) sont placées dans la seconde position et le gaz contenu dans les réservoirs (3, 4) est acheminé vers le premier conduit (12) et vers le second conduit (14) de sorte que les troisième et quatrième clapets anti-retour (28, 29) restent fermés et que le premier ou le deuxième clapet anti-retour (21, 22) associé au réservoir ayant la pression la plus élevée soit ouvert.
